# EUROPÄISCHE PATENTSCHRIFT

(11) **EP 2 625 129 B1**
(45) Veröffentlichungstag und Bekanntmachung des Hinweises auf die Patenterteilung: **02.01.2019**
(21) Anmeldenummer: 11761371.1
(22) Anmeldetag: 26.09.2011
(51) Int. Cl.: B66B 11/04

(54) **AUFZUGANLAGE MIT LINEARMOTOR**
ELEVATOR INSTALLATION WITH LINEAR MOTOR
INSTALLATION D'ASCENSEUR AVEC MOTEUR LINÉAIRE

(30) Priorität: 07.10.2010 DE 102010042144
(43) Veröffentlichungstag der Anmeldung: 14.08.2013
(73) Patentinhaber: ThyssenKrupp Transrapid GmbH, 34127 Kassel (DE)
(72) Erfinder: LÖSER, Friedrich, 85521 Riemerling (DE); MILLER, Luipold, 85521 Ottobrunn (DE); ZHENG, Qinghua, 80331 München (DE)
(74) Vertreter: Hoeger, Stellrecht & Partner Patentanwälte mbB
(86) Internationale Anmeldenummer: PCT/EP2011/066693
(87) Internationale Veröffentlichungsnummer: WO 2012/045606

(56) Entgegenhaltungen:
- EP-A1- 0 556 595
- EP-A1- 1 507 329
- DE-T2- 68 921 853
- JP-A- 5 043 168
- JP-A- 9 175 753
- US-B1- 7 019 421
- TOSHIAKI ISHII: "ELEVATORS FOR SKYSCRAPERS", IEEE SPECTRUM, IEEE INC. NEW YORK, US, Bd. 31, Nr. 9, 1. September 1994 (1994-09-01), Seiten 42-46, XP000477509, ISSN: 0018-9235

## Beschreibung

Die Erfindung betrifft eine Aufzuganlage mit mindestens einem Fahrkorb, der mittels eines Linearmotors vertikal nach oben und nach unten verfahrbar ist, wobei der Linearmotor stationäre Primärteile sowie ein am Fahrkorb fixiertes Sekundärteil aufweist.

Herkömmliche Aufzuganlagen weisen in der Regel einen Fahrkorb auf, der in einem Schacht vertikal nach oben und unten verfahrbar ist und mittels einer Treibscheibe angetrieben wird, über die ein den Fahrkorb mit einem Gegengewicht verbindender Seilzug geführt ist. Derartige Aufzuganlagen haben sich in der Praxis bewährt. Bekannt sind auch Aufzuganlagen, bei denen der Fahrkorb hydraulisch angetrieben wird. Deren Einsatz bleibt aber aus technischen und wirtschaftlichen Gründen auf verhältnismäßig geringe Förderhöhen beschränkt.

Es wurde auch schon vorgeschlagen, insbesondere für Aufzuganlagen sehr hoher Gebäude Fahrkörbe zu verwenden, die ohne Seil direkt angetrieben werden mittels eines Linearmotors. Bei derartigen Aufzuganlagen können Gegengewichte ebenso entfallen wie Seilzüge. Dies hat den Vorteil, dass die zu beschleunigenden Massen bei einer Leerfahrt gering gehalten werden können, so dass der Fahrkorb mit hoher Geschwindigkeit und hoher Beschleunigung bewegt werden kann. Dadurch können Wartezeiten gering gehalten werden. Der Linearmotor weist hierbei im Schacht fixierte stationäre Primärteile auf, die mit einem am Fahrkorb fixierten Sekundärteil zusammenwirken. Beispielsweise kann das am Fahrkorb fixierte Sekundärteil in Form von Erregermagneten ausgestaltet sein und die im Schacht fixierten Primärteile können in Form von Statorwicklungen ausgebildet sein. Zur Erzielung eines hohen Wirkungsgrades des Linearmotors sollte ein Luftspalt zwischen dem Sekundärteil und den Primärteilen möglichst gering gehalten werden. Dies erfordert eine präzise Führung des Fahrkorbes sowie eine exakte Montage der Primär- und Sekundärteile des Linearmotors.

Aus dem Dokument EP 1 507 329 A1 ist eine Aufzuganlage bekannt mit einem Fahrkorb, der mittels eines Linearmotors vertikal nach oben und nach unten verfahrbar ist. Der Linearmotor umfasst ein stationäres Primärteil, das an einer Führungsschiene befestigt ist und aus mehreren, längs der Bahn des Fahrkorbes hintereinander angeordneten Modulen zusammengesetzt ist. Die Module weisen jeweils eine auf einem Substrat angeordnete Leiterbahn auf.

Aus dem Dokument US 7,019,421 B1 ist eine Aufzuganlage bekannt, bei der eine Plattform mittels eines Linearmotors in einem Schacht vertikal nach oben und nach unten bewegt werden kann. Der Linearmotor weist eine Vielzahl modulartiger Primärteile auf, die übereinander angeordnet sind und die an einer Schachtwand festgelegt sind. Außerdem weist der Linearmotor mehrere Sekundärteile auf, die an der Plattform fixiert sind.

Eine weitere Aufzuganlage mit einem Fahrkorb, der mit Hilfe eines Linearmotors in einem Schacht vertikal nach oben und nach unten verfahrbar ist, ist aus dem Dokument EP 0 556 595 A1 bekannt. Am Fahrkorb dieser Aufzuganlage sind Permanentmagnete fixiert und an einer Schachtrückwand sind eine Vielzahl von übereinander angeordneter Linearmotorstatoren festgelegt.

Bisher ist es nicht gelungen, eine technisch und wirtschaftlich befriedigende Lösung für den Einsatz eines Linearmotors bei Aufzuganlagen zu realisieren. Die Anordnung jeweils eines Funktionsteils des Linearmotors an den Schachtwänden und am Fahrkorb inklusive der erforderlichen Baugruppen zur Energieversorgung und Steuerung sowie auch die präzise Führung des Fahrkorbs zur Einhaltung eines möglichst geringen Luftspaltes zwischen den Primär- und Sekundärteilen stellt eine sehr hohe Anforderung an die Herstellung und Montage der Aufzuganlage dar. Schwierigkeiten ergeben sich auch aufgrund der zwischen den Primär- und Sekundärteilen herrschenden dynamischen und parasitären Kräfte des Linearmotors. Derartige Anforderungen und Schwierigkeiten führen letztlich zu komplexen Montagearbeiten über die gesamte Höhe des Schachtes.

Aufgabe der vorliegenden Erfindung ist es, eine Aufzuganlage der eingangs genanten Art derart weiterzubilden, dass sie eine einfachere Montage ermöglicht.

Diese Aufgabe wird bei einer Aufzuganlage der eingangs genannten Art erfindungsgemäß dadurch gelöst, dass die Aufzuganlage eine Vielzahl von Tragsegmenten aufweist, an denen jeweils mindestens ein Primärteil gehalten ist, wobei jeweils ein Tragsegment in Kombination mit dem mindestens einen daran gehaltenen Primärteil ein vorgefertigtes, selbständig handhabbares Antriebsmodul ausbildet, und wobei die Antriebsmodule aufeinander stapelbar sind und einen Fahrweg ausbilden, entlang dessen der mindestens eine Fahrkorb verfahrbar ist.

Bei der erfindungsgemäßen Aufzuganlage kommen Antriebsmodule zum Einsatz, die beispielsweise im Herstellerwerk vorgefertigt werden können. Die Antriebsmodule sind selbständig handhabbar und werden bei der Montage der Aufzuganlage aufeinander gestapelt. In ihrer Gesamtheit bilden die Antriebsmodule einen Fahrweg für den Fahrkorb aus. Die Antriebsmodule umfassen jeweils ein Tragsegment, an dem mindestens ein Primärteil des Linearmotors gehalten ist. Somit sind alle Bauteile und Baugruppen des stationären Motorteils des Linearmotors in vorgefertigte, selbständig handhabbare Antriebsmodule integriert. Dies erlaubt eine weitgehende Verlagerung der Montage-, Justage- und Qualitätssicherungsmaßnahmen in den Produktionsbereich der Aufzuganlage. Auf der Baustelle müssen dann lediglich noch die einzelnen Antriebsmodule aufeinander gestapelt werden zur Ausbildung des Fahrweges für den Fahrkorb. Sämtliche Bauteile und Funktionsflächen, die zur Realisierung der Antriebs-, Führungs-, Brems- und Haltefunktionen im Zusammenwirken mit dem am Fahrkorb fixierten Sekundärteil erforderlich sind, können in die Antriebsmodule integriert werden. Die Modularisierung erlaubt eine rationelle, qualitativ hochwertige Fertigung sowie eine beträchtliche Vereinfachung der Montage und Inbetriebnahme der Aufzuganlage vor Ort. Die Installation der Aufzuganlage in einem Gebäude kann an den Baufortschritt des Gebäudes angepasst werden. Mit zunehmendem Baufortschritt können immer weitere Antriebsmodule aufeinander gestapelt und mittels geeigneter Verbindungselemente elektrisch und mechanisch miteinander verbunden und an eine Energieversorgungseinrichtung des Gebäudes angeschlossen werden. Die Modularität der Aufzuganlage gestattet es, im Rahmen des Baufortschritts des Gebäudes Teilhöhen in Betrieb zu nehmen, so dass die Aufzuganlage bereits bei der Durchführung von Ausstattungsarbeiten des Gebäudes vor dessen endgültiger Fertigstellung genutzt werden kann.

Von Vorteil ist es, wenn die Antriebsmodule miteinander verspannbar sind. Dadurch kann die Montage der Aufzuganlage zusätzlich vereinfacht werden.

Es kann beispielsweise vorgesehen sein, dass aneinander anliegende Antriebsmodule mit Hilfe von mindestens einem Spannschloss miteinander verspannbar sind. Das Spannschloss kann eine Spannschraube aufweisen in Form einer Doppelschraube mit einem Rechts- und einem Linksgewinde, die zwei Antriebsmodule mit entsprechenden Innengewinden durch Zugspannung zusammenhält. Durch Drehung der Spannschraube kann die Verbindung zwischen den Antriebsmodulen verspannt oder gelockert werden. Die als Doppelschraube ausgebildete Spannschraube kann dazu zwischen dem Rechts- und dem Linksgewinde beispielsweise ein Querloch oder einen Mehrkant, insbesondere einen Sechskant, aufweisen. Durch geeignete Hilfsmittel, die an dem Querloch oder Mehrkant angreifen, können je nach Gewindegröße und Gewindesteigung sehr hohe Zugkräfte zwischen einander anliegenden Antriebsmodulen erzeugt werden.

Bevorzugt sind die Antriebsmodule formschlüssig miteinander verbindbar. Hierzu kann beispielsweise eine Nut- und Federverbindung zum Einsatz kommen. Die formschlüssige Verbindung der Antriebsmodule stellt auf einfache Weise sicher, dass die Antriebsmodule bei der Montage der Aufzuganlage ohne aufwendige Justagearbeiten exakt zueinander ausgerichtet werden können, um den Fahrweg für den Fahrkorb auszubilden.

Von besonderem Vorteil ist es, wenn die Antriebsmodule selbsttragend ausgestaltet sind. Bei einer derartigen Ausführungsform sind die Antriebsmodule so bemessen, dass sie neben der Drucklast durch ihr Eigengewicht auch die Lasten der Primärteile des Linearmotors aufnehmen und auch die Beschleunigungs-, Brems- und Führungskräfte des Linearmotors einschließlich auftretender dynamischer und parasitärer Kräfte zwischen den Primärteilen und dem Sekundärteil. Die selbsttragenden Antriebsmodule können in ihrer Gesamtheit eine Tragstruktur der Aufzuganlage ausbilden, die sämtliche Primärteile des Linearmotors umfasst. An der Tragstruktur kann der mindestens eine verfahrbare Fahrkorb entlangbewegt werden.

Günstigerweise sind die Antriebsmodule an einer Schachtwand und/oder an einer Gebäudestruktur horizontal abstützbar. Beispielsweise kann vorgesehen sein, dass die Antriebsmodule an einer Schachtwand der Aufzuganlage verankert werden können, wobei die Verankerung praktisch nur horizontal wirkende Kräfte aufnimmt, wohingegen vertikal ausgerichtete Kräfte von den aufeinander gestapelten Antriebsmodulen in den Schachtboden geleitet werden.

Der Einsatz einer Schachtwand, die sich von einem Schachtboden bis zu einer Schachtdecke der Aufzuganlage erstreckt, ist jedoch nicht zwingend erforderlich. Es kann auch vorgesehen sein, dass die Antriebsmodule unmittelbar an einer Gebäudestruktur horizontal abgestützt werden können. Hierbei kann vorgesehen sein, dass die Gebäudestruktur lediglich horizontal wirkende Kräfte aufnimmt, wohingegen vertikal ausgerichtete Kräfte von den Antriebsmodulen in den Schachtboden geleitet werden. Es kann aber auch vorgesehen sein, dass die Gebäudestruktur auch vertikal ausgerichtete Kräfte aufnimmt. Beispielsweise können die Antriebsmodule an Trag- oder Stützelementen der Gebäudestruktur hängend oder aufsitzend montierbar sein. Insbesondere können die Antriebsmodule an Geschossdecken fixiert werden, die die Antriebsmodule tragen. Die hängende oder aufsitzende Montage gibt beispielsweise die Möglichkeit, Aufzuganlagen zu realisieren, die sich lediglich über einen oberen Teilbereich eines Gebäudes erstrecken.

Günstigerweise umfassen die Antriebsmodule jeweils mindestens eine Befestigungsvorrichtung zum Fixieren an einer Schachtwand und/oder einer Gebäudestruktur. Die Befestigungsvorrichtung kann beispielsweise mindestens einen Anker umfassen, mit dessen Hilfe die Antriebsmodule mit der Schachtwand und/oder der Gebäudestruktur verbindbar sind.

Von besonderem Vorteil ist es, wenn die Antriebsmodule unter Zwischenlage von Dämpfungselementen an einer Schachtwand und/oder einer Gebäudestruktur fixierbar sind. Die Dämpfungselemente, die zwischen den Antriebsmodulen und der Schachtwand und/oder der Gebäudestruktur angeordnet sind, ermöglichen eine schwingungsarme Lagerung der Antriebsmodule. Dadurch wird während des Betriebes der Aufzuganlage die Übertragung von Schwingungen von den Antriebsmodulen auf die Schachtwand bzw. auf die Gebäudestruktur gering gehalten. Die Dämpfungselemente sind bevorzugt elastisch verformbar als Federelemente ausgebildet.

Wie bereits erläutert, bilden die aufeinander gestapelten Antriebsmodule in ihrer Gesamtheit einen Fahrweg für den mindestens einen Fahrkorb aus. Hierbei ist es von Vorteil, wenn die Antriebsmodule mindestens ein Führungselement aufweisen zur Führung des mindestens einen Fahrkorbs in vertikaler Richtung. Die Führungselemente der einzelnen Antriebsmodule können bei deren Montage fluchtend zueinander ausgerichtet werden. Zusätzliche Führungselemente, die erst nach der Montage der Antriebsmodule im Schacht montiert werden müssen, können dadurch entfallen.

Von besonderem Vorteil ist es, wenn das mindestens eine Führungselement in das Tragsegment des Antriebsmoduls eingebettet ist.

Es kann beispielsweise vorgesehen sein, dass die Antriebsmodule mindestens eine Führungsschiene aufweisen, entlang derer der mindestens eine Fahrkorb verfahrbar ist. Von besonderem Vorteil ist es, wenn die Antriebsmodule jeweils mehrere Führungsschienen umfassen. Beispielsweise kann vorgesehen sein, dass die Antriebsmodule zumindest zwei einander abgewandte Seitenflächen aufweisen, an denen jeweils eine Führungsschiene angeordnet ist. An den Führungsschienen können Führungsglieder entlanggleiten, die an dem mindestens einen Fahrkorb gehalten sind. Die Führungsglieder können beispielsweise als Führungsrollen ausgestaltet sein oder beispielsweise auch in Form von Gleitschuhen, die die Führungsschienen umgreifen.

Wie bereits erläutert, bilden die auf einer gestapelten Antriebsmodule in ihrer Gesamtheit einen Tragkörper der Aufzuganlage aus. Bei einer besonders bevorzugten Ausführungsform der Erfindung stützt sich der Tragkörper über eine Schwingungsdämpfungseinrichtung an einer Stellfläche ab, beispielsweise am Schachtboden. Die Schwingungsdämpfungseinrichtung ermöglicht es, dass während des Betriebes der Aufzuganlage auftretende vertikale Schwingungen allenfalls zu einem geringen Teil in die Stellfläche, beispielsweise den Schachtboden oder auch ein Gebäudefundament eingeleitet werden.

Es kann vorgesehen sein, dass zusätzlich zum Gebäudefundament ein nochmals isoliertes Fundament zum Einsatz kommt, das die Schwingungsdämpfungseinrichtung abstützt.

Die Schwingungsdämpfungseinrichtung kann beispielsweise eine Tilgermasse aufweisen. Derartige Tilgermassen ermöglichen eine sehr starke Dämpfung von Schwingungen.

Alternativ oder ergänzend kann vorgesehen sein, dass die Schwingungsdämpfungseinrichtung mindestens ein Federelement aufweist.

Von besonderem Vorteil ist es, wenn der aus den Antriebsmodulen gebildete Tragkörper der Aufzuganlage auf einer Tilgermasse aufsitzt, die ihrerseits über mindestens ein Federelement abgestützt ist. Die Kombination aus Tilgermasse und Federelement ermöglicht eine besonders schwingungsarme Lagerung der aufeinander gestapelten Antriebsmodule auf einer Stellfläche, beispielsweise einem Fundament.

Bei einer bevorzugten Ausgestaltung der Erfindung ist der aus den aufeinander gestapelten Antriebsmodulen gebildete Tragkörper in vertikaler Richtung justierbar. Beispielsweise kann vorgesehen sein, dass der Tragkörper mittels eines Hebebockes angehoben oder abgesenkt werden kann. Die Justage gibt die Möglichkeit, Verschiebungen des die Aufzuganlage aufnehmenden Gebäudes zu kompensieren. Derartige Verschiebungen können beispielsweise durch Schwinden, Kriechen oder Setzungen des Gebäudes hervorgerufen werden. Dadurch, dass der Tragkörper in seiner Gesamtheit in vertikaler Richtung justiert werden kann, können einzelnen Justagearbeiten an den Antriebsmodulen und insbesondere an den Primärteilen des Linearmotors sowie auch an den Führungselementen entfallen.

Vorteilhafterweise umfassen die Antriebsmodule Daten- und/oder Energieübertragungselemente. Dadurch können zusätzliche Daten- oder Energieübertragungselemente entfallen, die nach der Montage der Antriebsmodule ergänzend im Schacht montiert werden müssten. Die Montage der Aufzuganlage gestaltet sich dadurch besonders einfach.

Als Daten- und Energieübertragungselemente können beispielsweise Daten- bzw. Energieleitungen zum Einsatz kommen. Die Energieleitungen können insbesondere als Kabel ausgestaltet sein. Zur Datenübertragung können auch Lichtleiter vorgesehen sein. Die Daten- und/oder Energieübertragungselemente können unmittelbar an den Tragsegmenten der Antriebsmodule festgelegt sein.

Von Vorteil ist es, wenn die Antriebsmodule elektrische und/oder optische Verbindungselemente aufweisen zum Verbinden der Daten- und/oder Energieübertragungselemente benachbarter Antriebsmodule. Die Verbindungselemente sind vorzugsweise steckbar miteinander verbindbar. Sie können beispielsweise buchsen- bzw. steckerförmig ausgestaltet sein. Insbesondere kann vorgesehen sein, dass die Verbindungselemente benachbarter Antriebsmodule beim Aufeinandersetzen der Antriebsmodule formschlüssig miteinander zusammenwirken. Dies ermöglicht eine weitere Vereinfachung der Montage der Aufzuganlage.

Bevorzugt sind die Tragsegmente der Antriebsmodule aus einem Betonmaterial gefertigt. Dies ermöglicht auf konstruktiv einfache Weise eine selbsttragende Ausgestaltung der Antriebsmodule.

Von besonderem Vorteil ist es, wenn der am Fahrkorb fixierbare Sekundärteil des Linearmotors als vorgefertigtes, selbstständig handhabbares Sekundärmodul ausgestaltet ist, das am Fahrkorb festlegbar ist. Dies ermöglicht es, auch Montage-, Justage- und Qualitätssicherungsmaßnahmen des Sekundärteils in den Produktionsbereich zu verlagern. Das funktionsgerechte Zusammenwirken der Primärteile des Linearmotors mit dem Sekundärteil kann dann bereits im Herstellerwerk geprüft werden.

Die nachfolgende Beschreibung bevorzugter Ausführungsformen der Erfindung dient im Zusammenhang mit der Zeichnung der näheren Erläuterung. Es zeigen:
- Figur 1:: einen schematischen vertikalen Halbschnitt einer ersten Ausführungsform einer erfindungsgemäßen Aufzuganlage mit einem Fahrkorb, der entlang eines aus identischen Antriebsmodulen gebildeten Tragkörpers vertikal nach oben und nach unten verfahrbar ist;
- Figur 2:: eine Schnittansicht eines Antriebsmoduls entlang der Linie 2-2 in Figur 1;
- Figur 3:: eine vergrößerte Schnittansicht von Detail A aus Figur 1;
- Figur 4:: eine Schnittansicht der Aufzuganlage längs der Linie 4-4 in Figur 1;
- Figur 5:: einen schematischen Halbschnitt einer zweiten Ausführungsform einer erfindungsgemäßen Aufzuganlage im Bereich eines Schachtbodens;
- Figur 6:: einen schematischen Halbschnitt einer dritten Ausführungsform einer erfindungsgemäßen Aufzuganlage und
- Figur 7:: einen schematischen Halbschnitt einer vierten Ausführungsform einer erfindungsgemäßen Aufzuganlage.

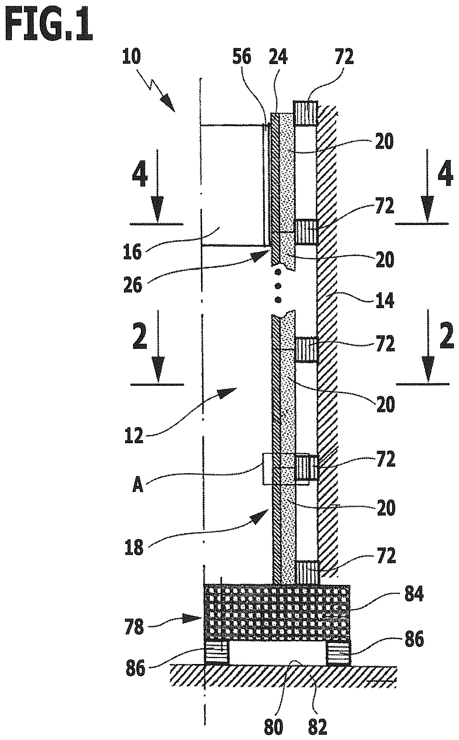

In den Figuren 1 bis 4 ist schematisch eine erste Ausführungsform einer erfindungsgemäßen Aufzuganlage dargestellt, die insgesamt mit dem Bezugszeichen 10 belegt ist. Diese umfasst einen Schacht 12, der von Schachtwänden begrenzt wird, wobei in der Zeichnung zur Erzielung einer besseren Übersicht nur eine einzige Schachtwand 14 dargestellt ist.

Im Schacht 12 ist in der dargestellten Ausführungsform ein Fahrkorb 16 vertikal nach oben und nach unten verfahrbar. Die Erfindung ist jedoch nicht auf Aufzuganlagen begrenzt, bei denen ein einziger Fahrkorb zum Einsatz kommt. Es kann auch vorgesehen sein, dass die Aufzuganlage mehrere Fahrkörbe aufweist, die im Schacht 12 übereinander angeordnet und unabhängig voneinander vertikal nach oben und nach unten verfahren werden können.

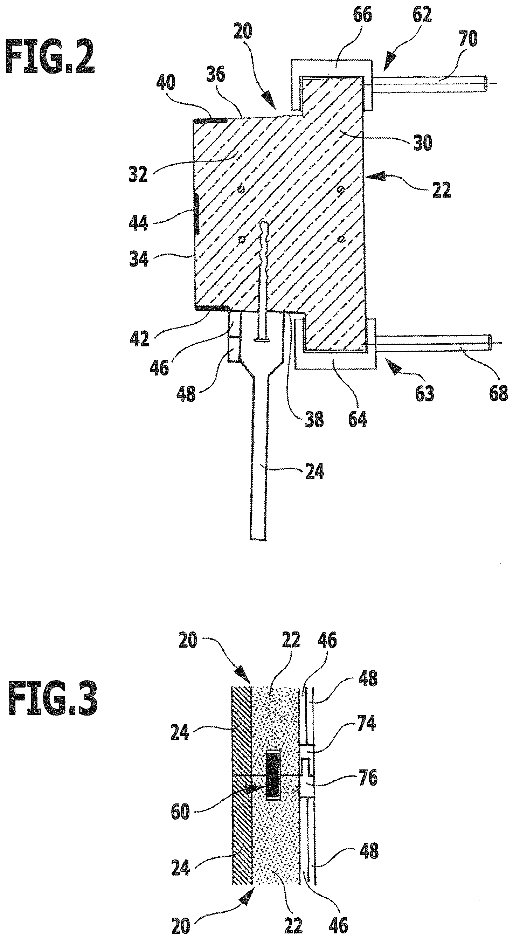

Der Fahrkorb 16 kann entlang eines sich über die gesamte Länge des Schachtes 12 erstreckenden Tragkörpers 18 verfahren werden. Der Tragkörper 18 wird von identisch ausgestalteten und aufeinander gestapelten Antriebsmodulen 20 gebildet, deren Ausgestaltung sich insbesondere aus Figur 2 ergibt. Sie umfassen jeweils ein aus einem Betonmaterial gefertigtes massives Tragsegment 22 sowie ein am Tragsegment 22 fixiertes Primärteil 24 eines Linearmotors 26, der den Fahrkorb 16 antreibt.

Das Tragsegment umfasst einen Rechteckbereich 30 und einen von einer Längsseite des Rechteckbereiches 30 abstehenden, in den Schacht 12 hineinragenden Trapezbereich 32. Der Rechteckbereich 30 dient der Festlegung des Tragsegmentes 22 im Schacht 12, und der Trapezbereich 32 dient der Führung und dem Antrieb des Fahrkorbes 16. Der Trapezbereich 32 weist eine dem Rechteckbereich 30 abgewandte Stirnseite 34 auf sowie eine erste Schrägseite 36 und eine zweite Schrägseite 38, die die Stirnseite 34 mit dem Rechteckbereich 30 verbinden. An einem der Stirnseite 30 unmittelbar benachbarten Endbereich trägt die erste Schrägseite 36 ein erstes Führungselement in Form einer ersten Führungsschiene 40. In entsprechender Weise trägt die zweite Schrägseite 38 in einem der Stirnseite 34 unmittelbar benachbarten Endbereich ein zweites Führungselement in Form einer zweiten Führungsschiene 42, und an der Stirnseite 34 ist mittig zwischen der ersten Führungsschiene 40 und der zweiten Führungsschiene 42 ein drittes Führungselement in Form einer dritten Führungsschiene 44 gehalten.

Das Primärteil 24 ist an der zweiten Schrägseite 38 des Tragsegmentes 22 festgelegt, wobei es im Wesentlichen senkrecht zur zweiten Schrägseite 32 ausgerichtet ist. Zwischen dem Primärteil 24 und der zweiten Führungsschiene 42 sind an der zweiten Schrägseite 38 ein Datenübertragungselement 46 und ein Energieübertragungselement 48 festgelegt.

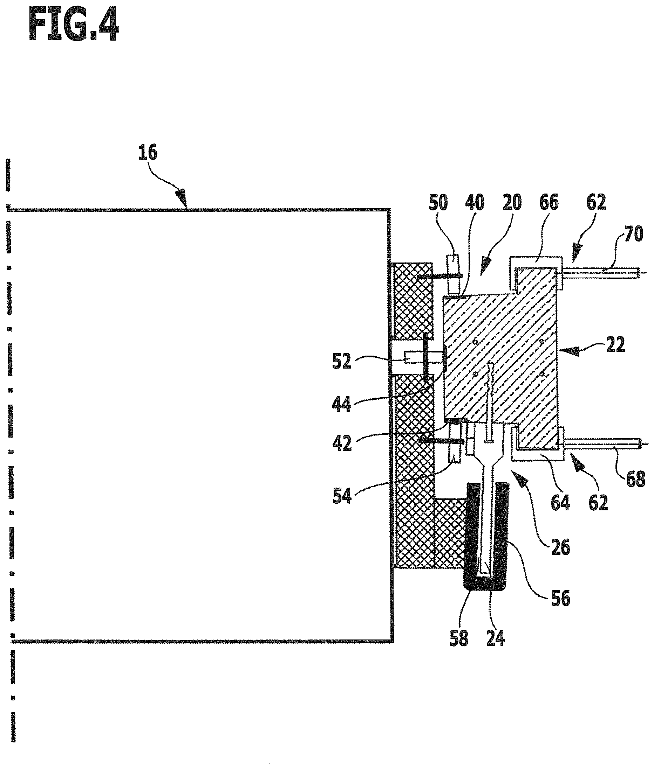

Wie bereits erwähnt, umfasst die Aufzuganlage 10 eine Vielzahl von Antriebsmodulen 20, die identisch ausgebildet sind und übereinander gestapelt sind. In ihrer Gesamtheit bilden sie den Tragkörper 18 aus. Der Fahrkorb 16 gleitet mittels Führungsglieder in Form von Führungsrollen 50, 52, 54 an den Führungsschienen 40, 42 und 44 entlang. Zur Kopplung mit den an den Antriebsmodulen 20 fixierten Primärteilen 24 weist der Fahrkorb 16 ein Sekundärteil 56 des Linearmotors 26 auf. Das Sekundärteil 56 ist U-förmig ausgestaltet und umgreift die fluchtend zueinander ausgerichteten Primärteile 24, wobei sich zwischen dem jeweiligen Primärteil 24 und dem Sekundärteil 56 ein Luftspalt 58 geringer Ausdehnung ausbildet. Dies wird aus Figur 4 deutlich.

An einander anliegende Antriebsmodule 20 sind mit Hilfe formschlüssig zusammenwirkender Verbindungselemente miteinander verbunden und mittels eines Spannschlosses 60 miteinander verspannt. Die Antriebsmodule 20 sind jeweils selbsttragend ausgestaltet, so dass der von der Gesamtheit der Antriebsmodule 20 gebildete Tragkörper 18 sowohl das Eigengewicht der Antriebsmodule 20 als auch die Beschleunigungs-, Brems- und Führungskräfte des Fahrkorbes 16 aufnimmt. Zur horizontalen Anbindung des Tragkörpers 18 an die Schachtwand 14 weisen die Antriebsmodule 20 zwei Befestigungsvorrichtungen 62, 63 auf mit zwei identisch ausgebildeten Halteklammern 64, 66, die jeweils einen Endabschnitt des Rechteckbereichs 30 des Tragsegmentes 22 umgreifen und mittels Zuganker 68 bzw. 70 mit der Schachtwand 14 verbunden sind. Um die Übertragung von Schwingungen des Tragkörpers 18 an die Schachtwand 14 zu reduzieren, sind zwischen den Antriebsmodulen 20 und der Schachtwand 14 mehrere im Abstand zueinander angeordnete, identisch ausgebildete Dämpfungselemente 72 angeordnet. Dies wird aus Figur 1 deutlich.

Die Daten- und Energieübertragungselemente 46, 48 von Antriebsmodulen 20, die unmittelbar aneinander anliegen, sind mittels steckbar verbindbarer Verbindungselemente 74, 76 miteinander verbunden. Dies wird aus Figur 3 deutlich. Die Verbindungselemente 74, 76 können beispielsweise in Form einer Verbindungsbuchse und eines formschlüssig mit dieser zusammenwirkenden Verbindungssteckers ausgestaltet sein. Werden die Antriebsmodule 20 formschlüssig miteinander verbunden, so greift jeweils ein Verbindungsstecker in eine komplementär ausgebildete Verbindungsbuchse.

Der Tragkörper 18 stützt sich über eine Schwingungsdämpfungseinrichtung 78 an einer Stellfläche 80 ab. Die Stellfläche 80 bildet den Boden des Schachtes 12. Sie ist Teil eines Fundamentes 82, das die auf den Tragkörper 18 einwirkenden Vertikalkräfte aufnimmt. Es kann sich hierbei um das Fundament des Gebäudes handeln, in das die Aufzuganlage 10 eingebaut wird, es kann allerdings auch ein separates Fundament vorgesehen sein, das vom Gebäudefundament isoliert ist.

Die Schwingungsdämpfungseinrichtung 78 umfasst eine Tilgermasse 84, auf der der Tragkörper 18 aufsitzt und die sich über Federelemente 86 an der Stellfläche 80 abstützt.

Zur Montage der Aufzuganlage 10 können die vorgefertigten, selbständig handhabbaren Antriebsmodule 20 übereinander gestapelt und miteinander verspannt werden zur Ausbildung des Tragkörpers 18, der einen Fahrweg für den Fahrkorb 16 ausbildet, entlang dessen der Fahrkorb 16 verfahrbar ist. Auch das Sekundärteil 56 des Linearmotors 26 ist als vorgefertigtes, selbständig handhabbares Modul ausgebildet und kann bei der Montage der Aufzuganlage 10 am Fahrkorb 16 festgelegt werden. Durch die Integration der Primärteile 24 des Linearmotors 26 sowie der Führungsschienen 40, 42 und 44 in die Antriebsmodule 20 erübrigen sich aufwendige Justagearbeiten beim Einbau der Aufzuganlage 10 in den Schacht 12 ebenso wie spätere Nachjustagen, da keine sicherheitsrelevanten Schraubverbindungen Anwendung finden, die bei Einleitung dynamischer Lasten zur Lockerung und Lösung neigen. Die Führungsschienen 40, 42 und 44 sind in die massiven Tragsegmente 22 eingebettet. Alternativ kann auch vorgesehen sein, dass den Führungsschienen 40, 42 und 44 entsprechende Führungsflächen der Tragsegmente 22 unmittelbar der Führung des Fahrkorbes 16 dienen. Stoßversätze zwischen benachbarten Antriebsmodulen werden durch eine passgenaue Verbindung der Antriebsmodule vermieden. Sollten dennoch bei der Montage der Aufzuganlage 10 geringe Stoßversätze zwischen benachbarten Antriebsmodulen 20 auftreten, so können diese bei der Montage abgeschliffen werden.

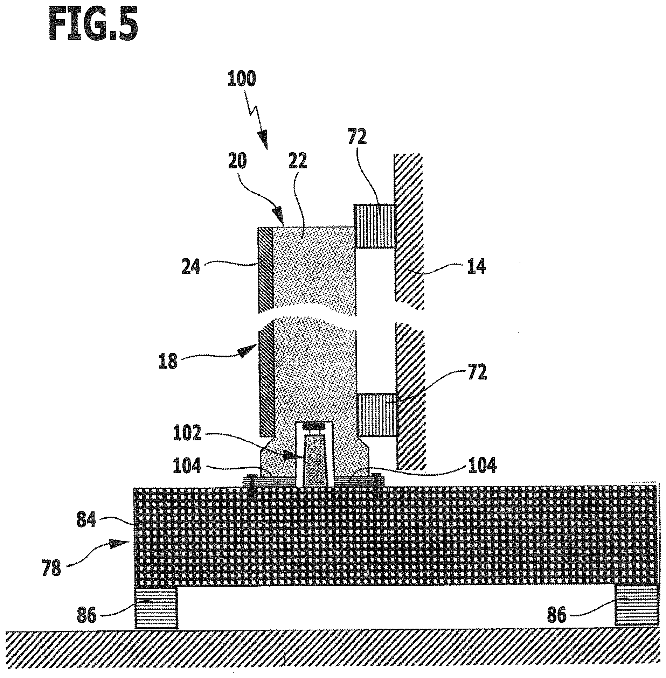

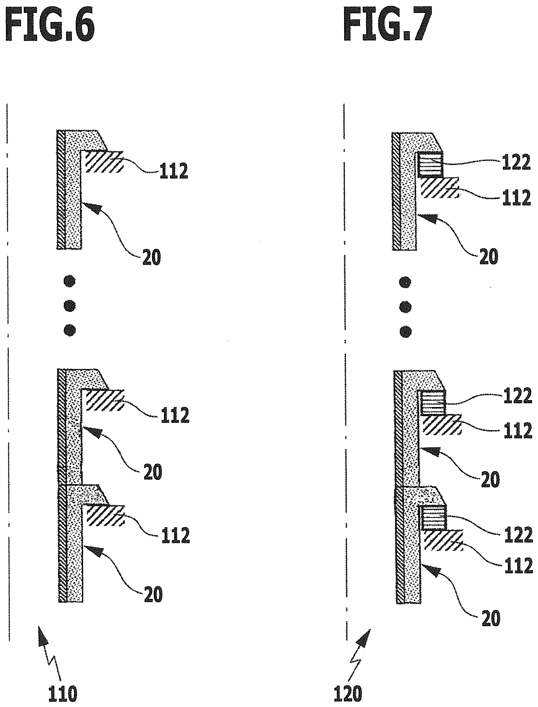

In Figur 5 ist eine zweite Ausführungsform einer erfindungsgemäßen Aufzuganlage schematisch dargestellt und insgesamt mit dem Bezugszeichen 100 belegt. Sie ist weitgehend identisch ausgebildet wie die voranstehend unter Bezugnahme auf die Figuren 1 bis 4 beschriebene Aufzuganlage 10. Für identische Bauteile werden daher in Figur 5 ebenso wie in den nachfolgend erläuterten Figuren 6 und 7 dieselben Bezugszeichen verwendet wie in den Figuren 1 bis 4. Bezüglich dieser Bezugszeichen wird zur Vermeidung von Wiederholungen auf die voranstehenden Erläuterungen verwiesen.

Die in Figur 5 dargestellte Aufzuganlage 100 unterscheidet sich von der in den Figuren 1 bis 4 illustrierten Aufzuganlage 10 lediglich dadurch, dass der von den Antriebsmodulen 20 gebildete Tragkörper 18 in vertikaler Richtung justiert werden kann. Hierzu kommt ein in Figur 5 schematisch dargestellter Hebebock 102 zum Einsatz, mit dessen Hilfe der Tragkörper 18 angehoben und abgesenkt werden kann. In einer gewünschten Stellung kann der Tragkörper 18 mittels Futterblechen 104 abgestützt werden, so dass der Hebebock 102 nach erfolgter Justage des Tragkörpers 18 wieder entspannt werden kann.

Die Möglichkeit, den Tragkörper 18 mittels des Hebebockes 102 in vertikaler Richtung zu versetzen, ist insbesondere im Hinblick auf Setzungen des Gebäudes von Vorteil, in das die Aufzuganlage 100 eingebaut wird. Kommt es zu derartigen Setzungen, so kann der Tragkörper 18 entsprechend nachjustiert werden, ohne dass es erforderlich ist, die einzelnen Antriebsmodule 20 jeweils separat zu justieren. Bei Gebäudesetzungen erforderliche Justagearbeiten können dadurch gering gehalten werden.

In Figur 6 ist eine dritte Ausführungsform einer erfindungsgemäßen Aufzuganlage dargestellt, die insgesamt mit dem Bezugszeichen 110 belegt ist. Von den voranstehend erläuterten Aufzuganlagen 10 und 100 unterscheidet sich die Aufzuganlage 110 dadurch, dass sich die Antriebsmodule 20 des Tragkörpers 18 in vertikaler Richtung jeweils an einer Gebäudestruktur abstützen, nämlich an einer Gebäudedecke 112, die ein Antriebsmodul 20 trägt. Eine derartige Ausgestaltung ist insbesondere dann von Vorteil, wenn sich die Aufzuganlage 110 lediglich über einen oberen Gebäudebereich erstrecken soll. Die Abstützung an einer Gebäudestruktur gibt auch die Möglichkeit, auf Schachtwände zu verzichten.

In Figur 7 ist eine vierte Ausführungsform einer erfindungsgemäßen Aufzuganlage dargestellt, die insgesamt mit dem Bezugszeichen 120 belegt ist. Sie unterscheidet sich von der in Figur 6 dargestellten Aufzuganlage 110 lediglich dadurch, dass zwischen den Antriebsmodulen 20 und der jeweiligen Gebäudedecke 112, an der die Antriebsmodule 20 gehalten sind, ein Dämpfungselement 122 angeordnet ist. Durch die Bereitstellung der Dämpfungselemente 122 kann die Übertragung von Schwingungen von den Antriebsmodulen 20 auf die Gebäudedecken gering gehalten werden.

## Patentansprüche

1. Aufzuganlage (10; 100; 110; 120) mit mindestens einem Fahrkorb (16), der mittels eines Linearmotors vertikal nach oben und nach unten verfahrbar ist, wobei der Linearmotor stationäre Primärteile (24) sowie ein am Fahrkorb (16) fixiertes Sekundärteil (56) aufweist, **dadurch gekennzeichnet, dass** die Aufzuganlage (10; 100; 110; 120) eine Vielzahl von Tragsegmenten (22) aufweist, an denen jeweils mindestens ein Primärteil (24) gehalten ist, wobei jeweils ein Tragsegment (22) in Kombination mit dem mindestens einen daran gehaltenen Primärteil (24) ein vorgefertigtes, selbständig handhabbares Antriebsmodul (20) ausbildet, und wobei die Antriebsmodule (20) aufeinander stapelbar sind und einen Fahrweg ausbilden, entlang dessen der mindestens eine Fahrkorb (16) verfahrbar ist.

2. Aufzuganlage nach Anspruch 1, **dadurch gekennzeichnet, dass** die Antriebsmodule (20) miteinander verspannbar sind.

3. Aufzuganlage nach Anspruch 2, **dadurch gekennzeichnet, dass** aneinander anliegende Antriebsmodule (20) mit Hilfe von mindestens einem Spannschloss (60) miteinander verspannbar sind.

4. Aufzuganlage nach einem der voranstehenden Ansprüche, **dadurch gekennzeichnet, dass** die Antriebsmodule (20) formschlüssig miteinander verbindbar sind.

5. Aufzuganlage nach einem der voranstehenden Ansprüche, **dadurch gekennzeichnet, dass** die Antriebsmodule (20) selbsttragend ausgestaltet sind.

6. Aufzuganlage nach einem der voranstehenden Ansprüche, **dadurch gekennzeichnet, dass** die Antriebsmodule (20) an einer Schachtwand (14) und/oder an einer Gebäudestruktur (112) horizontal abstützbar sind.

7. Aufzuganlage nach einem der voranstehenden Ansprüche, **dadurch gekennzeichnet, dass** die Antriebsmodule (20) jeweils mindestens eine Befestigungsvorrichtung (62, 63) aufweisen zum Fixieren an einer Schachtwand (14) und/oder einer Gebäudestruktur (112).

8. Aufzuganlage nach einem der voranstehenden Ansprüche, **dadurch gekennzeichnet, dass** die Antriebsmodule (20) unter Zwischenlage von Dämpfungselementen (72, 122) an einer Schachtwand (14) und/oder einer Gebäudestruktur (112) fixierbar sind.

9. Aufzuganlage nach einem der voranstehenden Ansprüche, **dadurch gekennzeichnet, dass** die Antriebsmodule (20) mindestens ein Führungselement aufweisen zur Führung des mindestens einen Fahrkorbes in vertikaler Richtung.

10. Aufzuganlage nach Anspruch 9, **dadurch gekennzeichnet, dass** zumindest ein Führungselement in das Tragsegment (22) eingebettet ist.

11. Aufzuganlage nach Anspruch 9 oder 10, **dadurch gekennzeichnet, dass** die Führungselemente als Führungsschienen (40, 42, 44) ausgestaltet sind, entlang derer der mindestens eine Fahrkorb (16) verfahrbar ist.

12. Aufzuganlage nach einem der voranstehenden Ansprüche, **dadurch gekennzeichnet, dass** die aufeinander gestapelten Antriebsmodule (20) in ihrer Gesamtheit einen Tragkörper (18) ausbilden, der über eine Schwingungsdämpfungseinrichtung (78) auf einer Stellfläche (80) aufsitzt.

13. Aufzuganlage nach Anspruch 12, **dadurch gekennzeichnet, dass** die Schwingungsdämpfungseinrichtung (78) eine Tilgermasse (84) aufweist.

14. Aufzuganlage nach Anspruch 12 oder 13, **dadurch gekennzeichnet, dass** die Schwingungsdämpfungseinrichtung (78) mindestens ein Federelement (86) aufweist.

15. Aufzuganlage nach einem der voranstehenden Ansprüche, **dadurch gekennzeichnet, dass** die aufeinander gestapelten Antriebsmodule (20) in ihrer Gesamtheit einen Tragkörper (18) ausbilden, der in vertikaler Richtung justierbar ist.

16. Aufzuganlage nach einem der voranstehenden Ansprüche, **dadurch gekennzeichnet, dass** die Antriebsmodule (20) Daten- und/oder Energieübertragungselemente (46, 48) aufweisen.

17. Aufzuganlage nach Anspruch 16, **dadurch gekennzeichnet, dass** die Antriebsmodule (20) elektrische und/oder optische Verbindungselemente (74, 76) aufweisen zum Verbinden der Daten- und/oder Energieübertragungselemente (46, 48) an einander anliegender Antriebsmodule.

18. Aufzuganlage nach einem der voranstehenden Ansprüche, **dadurch gekennzeichnet, dass** Tragsegmente (22) aus Betonmaterial gefertigt sind.

19. Aufzuganlage nach einem der voranstehenden Ansprüche; **dadurch gekennzeichnet, dass** das Sekundärteil (56) des Linearmotors (26) als vorgefertigtes, selbständig handhabbares Sekundärmodul ausgestaltet ist, das am Fahrkorb (16) festlegbar ist.

## Claims

1. Elevator installation (10; 100; 110; 120) having at least one elevator car (16) which is movable vertically upwardly and downwardly by way of a linear motor, wherein the linear motor comprises stationary primary parts (24) and a secondary part (56) which is fixed to the elevator car (16), **characterized in that** the elevator installation (10; 100; 110; 120) comprises a plurality of support segments (22), each of which has held thereon at least one primary part (24), wherein in each case a support segment (22) in combination with the at least one primary part (24) held thereon forms a prefabricated, independently handleable drive module (20) and wherein the drive modules (20) are stackable one on top of the other and form a travel path along which the at least one elevator car (16) is movable.

2. Elevator installation in accordance with claim 1, **characterized in that** the drive modules (20) are clampable together.

3. Elevator installation in accordance with claim 2, **characterized in that** drive modules (20) that are in contact against each other are clampable together with the aid of at least one turnbuckle (60).

4. Elevator installation in accordance with any one of the preceding claims, **characterized in that** the drive modules (20) are connectable to one another in a form-locking manner.

5. Elevator installation in accordance with any one of the preceding claims, **characterized in that** the drive modules (20) are of self-supporting configuration.

6. Elevator installation in accordance with any one of the preceding claims, **characterized in that** the drive modules (20) are horizontally supportable on a shaft wall (14) and/or on a building structure (112).

7. Elevator installation in accordance with any one of the preceding claims, **characterized in that** the drive modules (20) each comprise at least one fixing device (62, 63) for fixing to a shaft wall (14) and/or a building structure (112).

8. Elevator installation in accordance with any one of the preceding claims, **characterized in that** the drive modules (20) are fixable to a shaft wall (14) and/or a building structure (112) with damping elements (72, 122) interposed therebetween.

9. Elevator installation in accordance with any one of the preceding claims, **characterized in that** the drive modules (20) comprise at least one guide element for guiding the at least one elevator car in a vertical direction.

10. Elevator installation in accordance with claim 9, **characterized in that** at least one guide element is embedded in the support segment (22).

11. Elevator installation in accordance with claim 9 or 10, **characterized in that** the guide elements are configured as guide rails (40, 42, 44) along which the at least one elevator car (16) is movable.

12. Elevator installation in accordance with any one of the preceding claims, **characterized in that**, as a whole, the drive modules (20) stacked one on top of the other form a support body (18) which is supported on a supporting surface (80) via a vibration damping device (78).

13. Elevator installation in accordance with claim 12, **characterized in that** the vibration damping device (78) comprises a damper mass (84).

14. Elevator installation in accordance with claim 12 or 13, **characterized in that** the vibration damping device (78) comprises at least one spring element (86).

15. Elevator installation in accordance with any one of the preceding claims, **characterized in that**, as a whole, the drive modules (20) stacked one on top of the other form a support body (18) which is adjustable in the vertical direction.

16. Elevator installation in accordance with any one of the preceding claims, **characterized in that** the drive modules (20) comprise data and/or energy transmission elements (46, 48).

17. Elevator installation in accordance with claim 16, **characterized in that** the drive modules (20) comprise electrical and/or optical connecting elements (74, 76) for connecting the data and/or energy transmission elements (46, 48) of drive modules that are in contact against each other.

18. Elevator installation in accordance with any one of the preceding claims, **characterized in that** support segments (22) are made of concrete material.

19. Elevator installation in accordance with any one of the preceding claims, **characterized in that** the secondary part (56) of the linear motor (26) is configured as a prefabricated, independently handleable secondary module which is fixable to the elevator car (16).

## Revendications

1. Installation d'ascenseur (10 ; 100 ; 110 ; 120) avec au moins une cabine (16) qui est verticalement déplaçable vers le haut et vers le bas au moyen d'un moteur linéaire, dans laquelle le moteur linéaire présente des parties primaires (24) immobiles ainsi qu'une partie secondaire (56) fixée sur la cabine (16), **caractérisée en ce que** l'installation d'ascenseur (10 ; 100 ; 110 ; 120) présente une pluralité de segments de support (22), contre lesquels au moins une partie primaire (24) est respectivement maintenue, dans laquelle un segment de support (22) combiné à la au moins une partie primaire (24) maintenue contre lui forme un module d'entraînement (20) préfabriqué, manipulable de manière autonome, et dans laquelle les modules d'entraînement (20) sont empilables les uns sur les autres et forment une voie de circulation le long de laquelle la au moins une cabine (16) est déplaçable.

2. Installation d'ascenseur selon la revendication 1, **caractérisée en ce que** les modules d'entraînement (20) peuvent être serrés ensemble.

3. Installation d'ascenseur selon la revendication 2, **caractérisée en ce que** des modules d'entraînement (20) adjacents les uns aux autres peuvent être serrés ensemble à l'aide d'au moins un tendeur à vis (60).

4. Installation d'ascenseur selon l'une quelconque des revendications précédentes, **caractérisée en ce que** les modules d'entraînement (20) peuvent être reliés ensemble par complémentarité de formes.

5. Installation d'ascenseur selon l'une quelconque des revendications précédentes, **caractérisée en ce que** les modules d'entraînement (20) sont conçus de manière à être autoporteurs.

6. Installation d'ascenseur selon l'une quelconque des revendications précédentes, **caractérisée en ce que** les modules d'entraînement (20) peuvent s'appuyer horizontalement contre une paroi de cage (14) et/ou contre une structure de bâtiment (112).

7. Installation d'ascenseur selon l'une quelconque des revendications précédentes, **caractérisée en ce que** les modules d'entraînement (20) présentent respectivement au moins un dispositif d'amarrage (62, 63) pour une fixation contre une paroi de cage (14) et/ou une structure de bâtiment (112).

8. Installation d'ascenseur selon l'une quelconque des revendications précédentes, **caractérisée en ce que** les modules d'entraînement (20) peuvent être fixés, sous condition d'une couche intermédiaire d'éléments amortisseurs (72, 122), contre une paroi de cage (14) et/ou une structure de bâtiment (112).

9. Installation d'ascenseur selon l'une quelconque des revendications précédentes, **caractérisée en ce que** les modules d'entraînement (20) présentent au moins un élément de guidage pour un guidage de la au moins une cabine dans un sens vertical.

10. Installation d'ascenseur selon la revendication 9, **caractérisée en ce qu'**au moins un élément de guidage est incorporé dans le segment de support (22).

11. Installation d'ascenseur selon la revendication 9 ou 10, **caractérisée en ce que** les éléments de guidage sont conçus en tant que rails de guidage (40, 42, 44) le long desquels la au moins une cabine (16) est déplaçable.

12. Installation d'ascenseur selon l'une quelconque des revendications précédentes, **caractérisée en ce que** les modules d'entraînement (20) empilés les uns sur les autres forment dans leur ensemble un corps de support (18) qui repose sur une surface d'appui (80) par-dessus un équipement d'amortissement des vibrations (78).

13. Installation d'ascenseur selon la revendication 12, **caractérisée en ce que** l'équipement d'amortissement des vibrations (78) présente une masse amortisseur (84).

14. Installation d'ascenseur selon la revendication 12 ou 13, **caractérisée en ce que** l'équipement d'amortissement des vibrations (78) présente au moins un élément de ressort (86).

15. Installation d'ascenseur selon l'une quelconque des revendications précédentes, **caractérisée en ce que** les modules d'entraînement (20) empilés les uns sur les autres forment dans leur ensemble un corps de support (18) qui est réglable dans un sens vertical.

16. Installation d'ascenseur selon l'une quelconque des revendications précédentes, **caractérisée en ce que** les modules d'entraînement (20) présentent des éléments de transmission de données et/ou d'énergie (46, 48).

17. Installation d'ascenseur selon la revendication 16, **caractérisée en ce que** les modules d'entraînement (20) présentent des éléments de liaison (74, 76) électriques et/ou optiques pour une liaison des éléments de transmission de données et/ou d'énergie (46, 48) avec des modules d'entraînement adjacents les uns aux autres.

18. Installation d'ascenseur selon l'une quelconque des revendications précédentes, **caractérisée en ce que** des segments de support (22) sont fabriqués en béton.

19. Installation d'ascenseur selon l'une quelconque des revendications précédentes, **caractérisée en ce que** la partie secondaire (56) du moteur linéaire (26) est conçue en tant que module secondaire préfabriqué, manipulable de manière autonome, qui peut être immobilisé contre la cabine (16).
